# EUROPEAN PATENT SPECIFICATION

(11) **EP 1 315 962 B1**
(45) Date of publication and mention of the grant of the patent: **02.03.2011**
(21) Application number: 01960899.1
(22) Date of filing: 17.08.2001
(51) Int. Cl.: G01N 30/68

(54) **ANALYTE DETECTION SYSTEM**
NACHWEISSYSTEM FÜR ANAYTEN
SYSTEME DE DÉTECTION D'ANALYTES

(30) Priority: 02.09.2000 GB 0021567; 26.09.2000 GB 0023504
(43) Date of publication of application: 04.06.2003
(73) Proprietor: LOUGHBOROUGH UNIVERSITY ENTERPRISES LIMITED, Loughborough, Leicestershire LE11 3TU (GB)
(72) Inventor: BONE, Joanne Rosamond, Loughborough, Leicestershire LE11 1RU (GB); SMITH, Roger Malcolm, Loughborough, Leicestershire LE11 3JR (GB); SHARP,Barry Leonard, Loughborough, Leicestershire LE11 2RL (GB)
(74) Representative: Lambert, Ian Robert
(86) International application number: PCT/GB2001/003728
(87) International publication number: WO 2002/018939

(56) References cited:
- US-A- 4 883 958
- US-A- 4 958 529
- HOOIJSCHUUR E W J ET AL: "CAPILLARY ELECTROPHORESIS COUPLED ON-LINE WITH NITROGEN-SELECTIVE THERMIONIC DETECTION USING AN ELUENT-JET INTERFACE" JOURNAL OF HIGH RESOLUTION CHROMATOGRAPHY, WILEY VCH, WEINHEIM, DE, vol. 21, no. 10, 1 October 1998 (1998-10-01), pages 540-544, XP000790310 ISSN: 0935-6304
- DISANZO F P ET AL: "DETERMINATION OF TOTAL AROMATIC HYDROCARBONS IN LUBE BASE STOCKS BYLIQUID CHROMATOGRAPHY WITH NOVEL THERMOSPRAY FLAME IONIZATION DETECTION" ANALYTICAL CHEMISTRY, AMERICAN CHEMICAL SOCIETY. COLUMBUS, US, vol. 65, no. 23, 1 December 1993 (1993-12-01), pages 3359-3362, XP000416620 ISSN: 0003-2700
- TILOTTA D C ET AL: "EVALUATION OF THERMOSPRAY AND CROSS-FLOW PNEUMATIC NEBULIZATION AS MEANS OF INTERFACING A FLAME INFRARED EMISSION (FIRE) RADIOMETER TO A HIGH-PERFORMANCE LIQUID CHROMATOGRAPH" APPLIED SPECTROSCOPY, THE SOCIETY FOR APPLIED SPECTROSCOPY. BALTIMORE, US, vol. 47, no. 2, 1 February 1993 (1993-02-01), pages 192-200, XP000338521 ISSN: 0003-7028
- HOOIJSCHUUR ET AL.: "potential of flame ionization detection coupled on-line with microcolumn liquid chromatography using aqueous eluents and an eluent-jet interface" JOURNAL OF HIGH RESOLUTION CHROMATOGRAPHY., XP001051887 WILEY VCH, WEINHEIM., DE ISSN: 0935-6304 cited in the application

## Description

This invention relates to an analyte detection system, in particular to a "universal" detection system in which an analyte analysis stage, such as a liquid chromatography stage, is interfaced to a flame based detector, such as a flame ionisation detector (FID).

Traditionally, the direct detection of compounds (analytes) dissolved in flowing liquid streams, such as the eluent from liquid chromatography, or the effluent from flow injection analyses, has generally depended on spectroscopic methods, usually ultraviolet or fluorescence spectroscopy. These widely used approaches require the presence in the analyte of a chromophore or fluorophore. However, many compounds of interest produce only a low response or a negligible response using such detection methods. In addition many compounds which provide a signal can generate very different mass responses (i.e., large differences in the magnitude of the output signal for the same amount of analyte, because of differences in extinction coefficients) so that direct individual calibration of the detector is required.

A wider response can be obtained by using a mass spectrometry as a detector, but currently liquid chromatography-mass spectrometry linked systems (LC-MS) are rather expensive and would normally not be employed for routine analyses. Similarly, the sample can be passed to a plasma torch (an inductively coupled plasma-ICP), where an element specific response can be obtained by emission (ICP-Emission) or mass spectrometry (ICP-MS), but again this is a relatively expensive method and is primarily applicable to analytes containing metal atoms rather than organic compounds. In each case the sample has to be evaporated, sprayed or nebulised into the gas phase so that it can be introduced into the detection cell or plasma.

Ever since liquid chromatographic methods have been employed, there has been a need for a so-called "universal detector", which could provide a response which ignored the eluent mobile phase but detected the dissolved analytes and gave a similar signal magnitude for similar quantities of each analytes in a mixture.

Previously reported broadly applicable or universal detection methods have primarily been based on the measurement of changes in the refractive index (RI) of the eluent, which tends to be a relatively insensitive method, because it depends on the measurement of small changes in the bulk properties of the eluent. The alternative approach has been the light scattering detector (LSD) (or mass evaporative detector), in which the eluent is sprayed into a chamber using an inert gas and the solvent is evaporated from the droplets leaving particles of involatile analytes. These pass through a light beam from a lamp or laser and the scattered light is detected. This detector has some limitations, since the response can be non- linear as it depends on particle size. This detector has the disadvantage that volatile components of the analyte mixture are usually lost together with the solvent so that only higher molecular weight analytes or involatile components can be detected.

The primary alternative group of methods have employed variants of the "transport" detector, which involve a step in which eluent is lost or hidden during the transport of the analyte from the end of the separation system to the detection step. The effluent is deposited on either a moving chain, moving belt, moving wire, rotating disc or helical wire and the solvent is evaporated (usually thermally and/or under a reduced pressure), leaving the analyte to be transported to the detection step. The detector in these cases is usually a flame ionisation detector (FID) or mass spectrometer (MS). Both of these detectors provide a broadly universal response for those organic analytes which reach the detector. Unfortunately, problems with the transport detectors, such as inhomogeneous sampling, loss of volatile analytes during solvent evaporation, spiking due to sample diffusion on the hot metal conveyors causing an increase in background noise and ghost peaks due to incomplete removal of analyte from reusable conveyor systems have limited their application. The mass spectrometer and flame ionisation detectors both provide a high energy to the analytes breaking them down to form ions, which can be detected as a current flowing across a potential difference. The primary difference is in the complexity of the system, the amount of information determined and hence the cost.

The linkage of liquid chromatography (LC) to a FID (a detector commonly associated with gas chromatography) is highly attractive, as the detector is much simpler to manufacture and operate than a mass spectrometer. Also, the FID has a high sensitivity, is capable of detecting both volatile and non-volatile species, and does not require a chromophore. The detector response is highly linear over a wide range of sample masses and most organic compounds will have a similar mass response, although compounds which do not burn are generally not detected. However, the application of FID to LC has been limited because most separations employ mixtures of an organic solvent (or solvents) and water as the eluent and the former causes a high background signal in the detector as it can bum. Hence, transport detectors of the type discussed above have been employed to remove the mobile phase before the detection step. The FID is well known as the most successful universal detector in gas chromatography where the inorganic carrier gas produces no response, but gas chromatography is limited to volatile and thermally stable analytes.

In the last few years, superheated (subcritical) water has been employed as the sole liquid component of the mobile phase for liquid chromatography, leading to a number of attempts to directly link the chromatographic separation stage to a flame ionisation detector. Superheated water is produced when water is heated at temperatures above 100°C under sufficient pressure to remain as a liquid. Under such conditions, it can mimic the elution characteristics of organic solvents and organic/aqueous mixtures. Furthermore, superheated water produces a negligible background response from the FID.

Published work has employed two main approaches. The first method is effectively based on the well known thermospray concept often used in early LC-MS coupling (Miller, D. J. and Hawthorne, S. B., Anal. Chem., 69 (1997) 623; Smith, R. M.; Burgess, R. J.; Chienthavorn, O.; Stuttard, J. R., LC-GC International, 12 (1999) 30; Ingelse, B. A.; Janssen, H. G.; Cramers, C. A., HRC-Journal of High Resolution Chromatography, 21 (1998) 613). These approaches employed a heated capillary tube, usually metal or glass, placed within the flame jet of the GC or very close to it. Generally a high temperature of about 300-400 °C is used causing the eluting liquid to flash-evaporate, thereby spraying any volatile components into the flame of the FID, where organic analytes bum generating a conventional signal. Additionally, the capillary often provides a back-pressure to the chromatographic system. A slightly different approach has been to use a commercially available eluent jet interface (Hooijschuur, E. W. J.; Kientz, C. E.; Brinkman, U. A., Th. J. High Res. Chrom., 23 (2000) 309). In this design the capillary contains a restriction close to the tip, which is inductively heated using 80-90W, thus producing a sharp temperature gradient.

Both these concepts are based on heating the aqueous solution to generate steam to transport the analyte into the gas phase and hence to the detection flame. A disadvantage with these systems is that if the analyte is involatile or thermally unstable, it can be deposited or degraded and may rapidly block the capillary, thus reducing spray efficiency. This appears to limit the useful response to analytes which are thermally stable and volatile. The main problem associated with these interfaces are the lack of reliability and robustness of the instrumentation.

Hooijschuur et al, ibid, also describes a comparison experiment in which an interface based on a microjet nebuliser is employed. In fact, it is this comparison experiment which, with hindsight, bears the closest similarity to the present invention. However, Hooijschuur et al is quite negative in its assessment of this nebuliser based technique, and compares the nebuliser based technique unfavourably with the eluent evaporation technique, which is the main thrust of Hooijschuur et al.

Furthermore, this comparison experiment is not a practical routine system, inter alia because a micro capillary liquid chromatography (LC) system is employed, together with a micro capillary linking the LC system to the nebuliser, thus limiting flow rates and hence sensitivity. Flow rates of 10µl min⁻¹ are reported. A further problem is that, even if higher flow rates were contemplated, condensed liquid would drain to the bottom of the detector and be blown through the flame causing considerable noise. A third problem is that if larger aerosol droplets are formed, they can cause spiking in the flame, since such larger droplets are not prevented from travelling from the nebuliser to the flame. A fourth problem is the rather cumbersome arrangement of the comparison experiment in which, apparently, the FID is positioned inverted below the nebuliser. It must be emphasised that this experiment was used for comparison purposes with the heated capillary technique which is the principal concern of Hooijschuur *et al.,* and the comparison was unfavourable towards the nebulisation technique. Thus the prior art in which the use of superheated water is combined with FID detection clearly points the skilled person towards flash evaporation of the eluent.

Further prior art is discussed below. GB 1475432 discloses an interface for liquid chromatography in which an oscillator is used to atomise the eluent from a chromatographic column. US 5 153 673 discloses a pulsed flame detector for use with numerous samples. US 3 967 931 discloses a system in which the eluent from a liquid chromatography column is aspirated directly into a flame, thereby producing an aerosol in situ within the flame. A problem associated with this approach is that non-volatile analytes can be degraded, causing depositions and possible blockages.

US 4,958,529 describes an interface for coupling liquid chromatography to solid or gas detectors. The effluent from the chromatographic device passes via a nebuliser into a gas diffusion cell for separating out most of the vaporised solvent while the particles of interest are output to the detector. This leads to a relatively complex interface as a chemical separation stage, the diffusion cell, is required to separate out the solvent.

The present invention overcomes the aforesaid problems and disadvantages, and provides a practical, cost-effective "universal" detector.

According to a first aspect of the invention there is provided an analyte detection system comprising:
a flame based analyte detector (14), characterised in that it additionally comprises;
a narrow bore tube (24) through which a condensed phase which produces no or negligible response from the flame based analyte detector and which contains the analyte flows from an analyte analysis stage;
a nebuliser (12) into which the condensed phase is introduced from the tube (24) and into which a nebuliser gas is introduced via a gas conducting conduit (26), for producing an analyte containing aerosol;
a spray chamber (16) into which the analyte containing aerosol is introduced from the nebuliser (12) for creating turbulence in the flow of aerosol and for introducing the analyte containing aerosol into the flame based analyte detector (14); and
an oven (22) within which the narrow bore tube (24), nebuliser (12), gas conducting conduit (26) and spray chamber (16) are located: and wherein the condensed phase reaches the nebuliser at a temperature substantially below boiling point and at a flow rate of greater than 20µl min⁻¹.
By providing systems having this combination of features, it is possible to produce a so-called "universal" detector which can be used to detect organic and inorganic compounds, irrespective of whether the compounds are volatile or non-volatile.
Additionally, elements can be detected. Furthermore, the system is practical and cost effective. Furtherstill, the provision of nebulisation means as a way of producing an aerosol removes the problems of deposition, decomposition and blockage associated with high temperature evaporative methods, since nebulisation takes place at a temperature substantially below the boiling point of the condensed phase.

Preferably the system operates at condensed phase flow rates greater than 50µlmin⁻¹ more preferably greater than 100µlmin⁻¹.

The condensed phase may be aqueous, and may be an aqueous solution. In a preferred embodiment, the condensed phase is a super heated aqueous solution. It is possible to include other components such as inorganic buffers, ion-pair reagents, acids, bases and organic additives such as formic acid or trifluoroacetic acid provided that such components give rise to no or negligible signal from the detector. Other possible solvents are carbon tetrachloride, Freons such as 124a, and subcritical carbon dioxide.

The condensed phase may be a supercritical fluid, such as carbon dioxide, xenon, argon, ammonia and nitrous oxide.

The condensed phase may be a superheated liquid phase, such as carbon dioxide or, as mentioned above, water.

The detector may be a FID. This has the advantage of providing a linear response over a wide analyte mass range, and is relatively inexpensive.

The detector may be a thermionic detector, pulsed flame photometric detector or flame photometric detector.

The analyte analysis stage may comprise an analyte separation stage, in which instance effluent from the analyte separation stage is introduced into the nebulisation means.

The analyte separation stage may comprise a liquid chromatographic stage.

The analyte separation stage may comprise a capillary electrophoresis, electrochromatographic or capillary electrochromatographic stage.

Alternatively, the analyte stage many comprise a flow injection analysis stage.

The system comprises a spray chamber in which separation of the aerosol is achieved so that larger aerosol droplets are not introduced to the flame based analyte detector. The spray chamber may be adapted to create turbulence in the flow of the aerosol. By removing larger droplets, noise from the detector is reduced.

The spray chamber may be adapted so as to cause the aerosol to flow in a centrifugal flow pattern.

According to a second aspect of the invention there is provided the use of a system as according to the first aspect of the invention to detect volatile and non-volatile compounds or elements.

According to a third aspect of the invention there is provided the use of a system according to the first aspect of the invention to detect organic compounds.

According to a fourth aspect of the invention there is provided the use of a system according to the first aspect of the invention to detect inorganic compounds.

Systems and uses in accordance with the invention will now be described with reference to the accompanying drawings, in which:-
- Figure 1: is a front view of an embodiment of a liquid chromatography system in accordance with the invention;
- Figure 2: shows a) front and b) side views of the spray chamber of Figure 1;
- Figure 3: is a chromatogram showing carbohydrate separation;
- Figure 4: is a chromatogram showing amino acid separation; and
- Figure 5: is a chromatogram showing benzaldehyde detection using superheated water as an eluent.

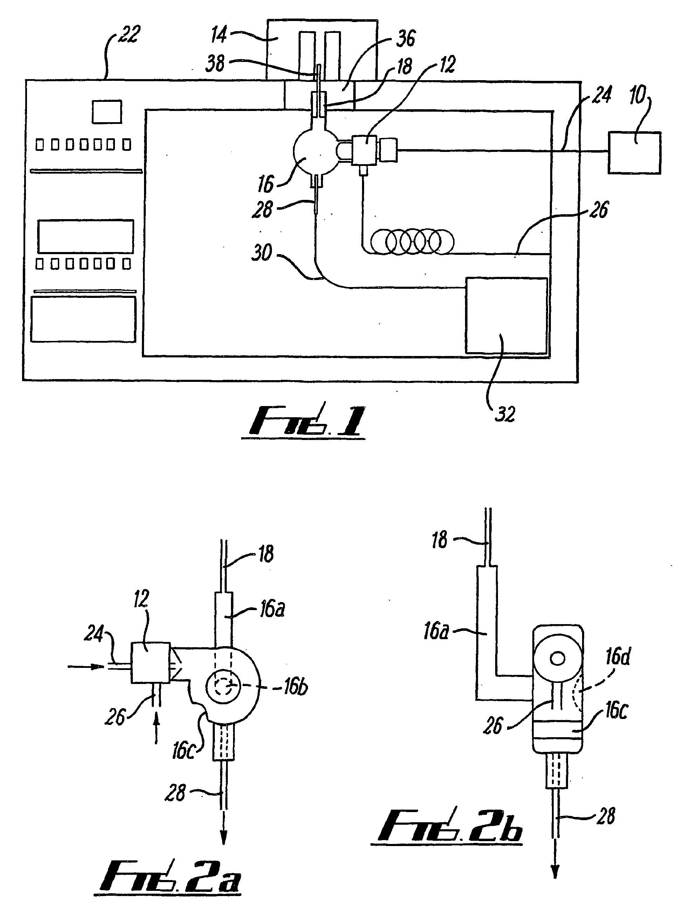

Figure 1 shows an analyte detection system comprising:
a separation stage (shown generally at 10) through which a condensed phase containing the analyte flows;
nebuliser means 12 into which the flowing condensed phase is introduced, the nebuliser means 12 producing an analyte containing aerosol;
a flame based analyte detector 14; and
means 16, 18 for introducing the analyte containing aerosol into said flame based analyte detector 14;
in which the condensed phase produces no or negligible response from flame based analyte detector 14; and
i) the system can operate at condensed phase flow rates of greater than 20µl min⁻¹, preferably greater than 50µl min⁻¹, most preferably greater than 100µl min⁻¹;
and ii) the means 16, 18 for introducing the analyte containing aerosol into said flame based detector 14 comprises a spray chamber 16.

The system further comprises a box/oven (which can maintain a temperature controlled environment) 22 containing the detection system, which is securely mounted to increase stability. The condensed phase flow enters a microconcentric nebuliser 12 through a narrow bore tube 24, and the liquid is sprayed into a cyclonic spray chamber 16 with a nebuliser gas, introduced via gas conducting conduit 26. The nebuliser gas can be any suitable inert gas such as nitrogen or argon. The cyclonic spray chamber 16 has a liquid drain 28 and connecting tubing 30, which can be connected to a extraction peristaltic pump 32 or similar device to remove any condensed liquid. The aerosol spray thus formed exits the cyclonic chamber 16 at side arm outlet 16a and passes into the bottom end of a connecting tube 18. The connecting tube 18 can be formed from any suitable material, such as steel or glass. Furthermore, the connection between the spray chamber 16 and connecting tube 18 does not have to be permanent, and in fact the system may be demountable. The connecting tube 18 passes through a heated block 36 and introduces the aerosol to the jet 38 of the flame detector 14. The heater block 36 can be controlled up to a temperature of 450°C, although the exact limit is not critical and may be largely in line with current FID designs. In fact, block temperatures in excess of conventionally used temperatures might be utilised in conjunction with the present invention. Hydrogen is added to the aerosol flow at a similar point to that of a conventional FID, but a higher flow rate of hydrogen than is usual is required if the condensed phase is aqueous, because the aqueous aerosol flow cools the flame. This necessitates a relatively high hydrogen flow, and the use of wider than normal mixing slots. A hydrogen flow rate of ca. 100 ml min⁻¹ has been found to be suitable, although it is unlikely that this value is a critical one. The jet of the flame based detector 14 comprises a wide bore alumina tube 38. It is also possible to use a different ceramic or another material. The internal diameter of the alumina tube 38 is ca. 1.5mm, although a wider range of internal diameters, perhaps 1 to 3mm, could be used depending on the gas flow employed.

Air is added around the flame as in conventional FID systems in order to maintain combustion. Flow rates are generally higher than in conventional FIDs; a representative value is 500ml min⁻¹. A detection signal is generated by maintaining a potential difference of ca. 170V between the jet and a collector (not shown).

In a representative, but non-limiting, example the analyte is dissolved in an aqueous solution which is introduced into the nebuliser at a flow rate of between 0.01 and 1.0 ml min⁻¹ through a capillary tube. Higher flow rates, up to ca. 3.0ml min⁻¹, might be contemplated. A typical flow rate of nebuliser gas is ca. 400 ml min⁻¹. The aqueous solution can contain limited quantities of dissolved inorganic salts, acids or bases to control pH and perform other known functions, provided that these additives do not result in any significant interfering signal from the FID.

The spray chamber 16 is an expansion chamber which is shown in more detail in Figure 2, in which like numerals are used to denote features which are identical to features shown in Figure 1. The spray chamber 16 contains a centrifugal flow path from the periphery where the effluent flow enters to the central exit 16b, coupled with a flow dimple 16c which creates turbulence in the flow, thereby breaking up laminar flow so that larger droplets (which might cause spiking in the flame) hit the walls and are lost, exiting via drain 28. Other ways of creating turbulence would readily present themselves to the skilled person. A second flow dimple 16d is disposed opposite the exit 16b. The configuration of the spray chamber is generally as described in Taylor et al, Journal of Analytical Atomic Spectrometry, 13 (1998) 1095-1100.

Water has been used in the separation stage as the condensed phase from ambient temperature up to ca. 250°C. When the separation temperature is greater than 100°C (superheated conditions), the condensed phase can be produced by generating a back-pressure using a restriction in the tubing after the separation stage, so that the water is below its boiling point when the water reaches the nebulisation means. Other ways of creating the back pressure include a frit or a mechanically operated solenoid. However, it should be noted that the condensed phase will not be at such elevated temperatures when it reaches the nebulisation means. In fact, the condensed phase will be at a temperature substantially below boiling point.

Furthermore, it should be noted that the temperature encountered by the effluent at the nebuliser means is substantially less than the boiling point of the condensed phase. This overcomes a disadvantage of thermospray type interfaces, namely that involatile or thermally unstable analytes can be degraded or deposited and thus block the spray capillary. It is possible to maintain the nebuliser means at a constant, but relatively low, temperature for stability purposes. In the case of water, the nebulisation means would be maintained at the temperature of 50 ° C or less.

The separation stage 10 is a LC system, although it is possible to utilise other separation stages such as capillary electrophoresis, electrochromatographic and capillary electrochromatographic stages. Other analyte analysis stages, such as flow injection analysis, might be used in place of a separation stage. Various LCs can be used in conjunction with the present invention: in particular, it is recognised that the internal diameters and internal volumes of the LC and the conduit which conveys the condensed phase to the nebuliser are advantageously large enough to support flow rates in excess of 20, preferably greater then 50, most preferably greater than 100µl min⁻¹. This is in contrast to the technique described in Hooijschuur *et al.*

In a specific embodiment, an LC system was constructed using a number of modular components. A Rheodyne 7161 injector was employed, and the mobile phase was pumped using a Jasco PU980 pump. Columns from a range of manufacturers were used, having different internal diameters from 2mm to 4.6mm, and lengths between 100 and 250mm. The columns were packed with a number of different stationary phases. The columns were heated in either a Jones Chromatography Column oven (for the temperatures up to 100°C) or a Pye Unicam 104 GC oven for higher temperatures (or if temperature gradients are employed). Optionally, a HPLC type UV spectroscopic detector could be placed between the column and the FID. A CETAC MCN-100 microconcentric nebuliser was employed (CETAC Technologies, Omaha, USA), although other nebulisers might be advantageously employed instead.

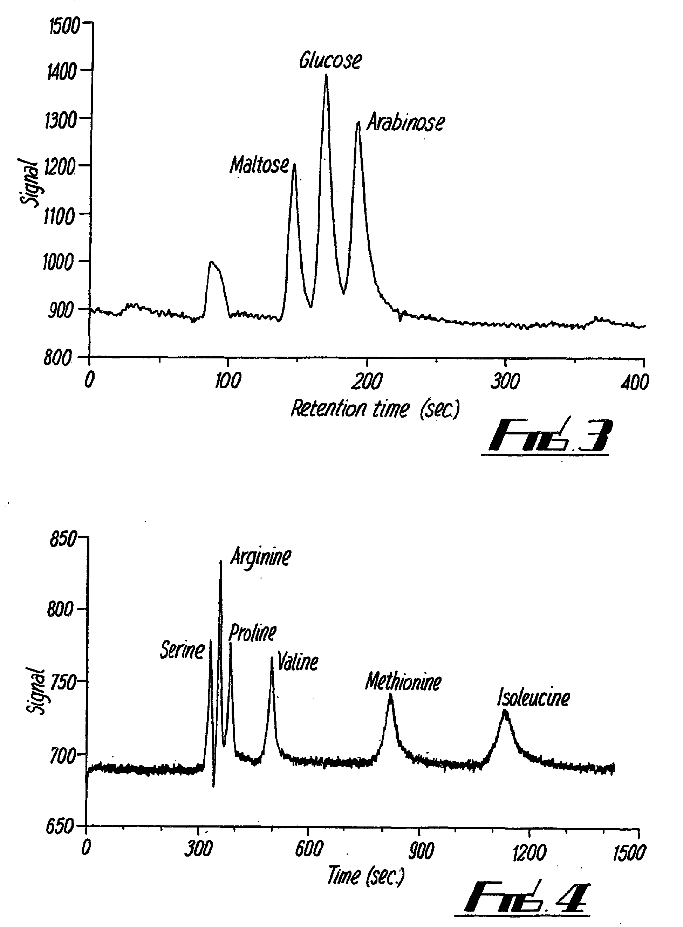

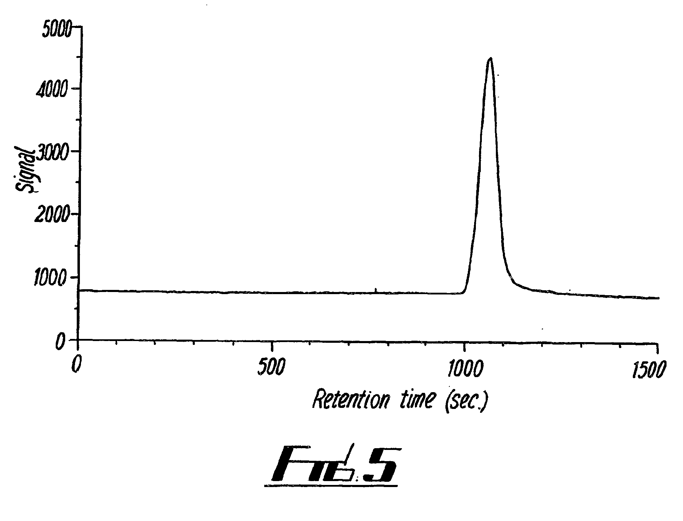

Figures 3 to 5 show chromatograms obtained in a number of experiments, using the apparatus of the specific embodiment. Figure 3 shows the separation of the carbohydrate maltose, glucose and arabinose using aqueous solution at 35°C and a flow rate of 0.5ml min⁻¹. Figure 4 shows the separation of the amino acids serine, arginine, proline, valine, methionine and isoleucine using aqueous solution (with 0.02% trifluoroacetic acid) at ambient temperature and a flow rate of 0.5ml min⁻¹. It is not possible to achieve these carbohydrate and amino acid separations using gas chromatography owing to the involatility of the species. HPLC is not easy to perform because these species lack chromophores which are required for spectroscopic detection. Figure 5 shows the separation of benzaldehyde using superheated water at 200 °C and a flow rate of 0.2ml min⁻¹.

In comparison to the nebuliser "comparison" experiment of Hooijschuur et al, the present system has the advantage of being able to handle much higher liquid flow rates, thereby increasing the versatility and sensitivity of the system. Furthermore, a higher nebuliser gas flow is used. This has the consequence that the gas flow itself, rather than gravity, is used to transport the aerosol droplets to the detector flame, thereby permitting the detector to be mounted in the conventional manner, above the aerosol introduction point, rather than in the inverted configuration of Hooijschuur et al. Furtherstill, the provision of the spray chamber provides advantages in terms of draining excess liquid and removing larger aerosol droplets.

## Claims

1. An analyte detection system comprising:
a flame based analyte detector (14), **characterised in that** it additionally comprises;
a narrow bore tube (24) through which a condensed phase which contains the analyte flows from an analyte analysis stage;
a nebuliser (12) into which the condensed phase is introduced from the tube (24) and into which a nebuliser gas is introduced via a gas conducting conduit (26), for producing an analyte containing aerosol;
a spray chamber (16) into which the analyte containing aerosol is introduced from the nebuliser (12) for creating turbulence in the flow of aerosol and for introducing the analyte containing aerosol into the flame based analyte detector (14); and
a temperature controlled environment (22) within which the narrow bore tube (24), nebuliser (12), gas conducting conduit (26) and spray chamber (16) are located: and
in which the condensed phase produces no or negligible response from the flame based analyte detector and wherein the condensed phase reaches the nebuliser at a temperature substantially below boiling point and at a flow rate of greater than 20µl min⁻¹.

2. An analyte detection system according to claim 1 in which the condensed phase is aqueous.

3. An analyte detection system according to claim 2 in which the condensed phase is an aqueous solution.

4. An analyte detection system according to claim 3 in which the condensed phase is a superheated aqueous solution.

5. An analyte detection system according to claim 1 in which the condensed phase is a supercritical fluid.

6. An analyte detection system according to claim 1 in which the condensed phase is a superheated liquid phase.

7. An analyte detection system according to any previous claim in which the detector is a flame ionisation detector.

8. An analyte detection system according to any of claims 1 to 7 in which the detector is a thermionic detector, pulsed flame photometric detector or flame photometric detector.

9. An analyte detection system according to any of claims 1 to 8 in which the analyte analysis stage comprises an analyte separation stage and effluent from the analyte separation stage is introduced into the nebulisation means.

10. An analyte detection system according to claim 9 in which the analyte separation stage comprises a liquid chromatographic stage.

11. An analyte detection system according to claim 9 in which the separation stage comprises a capillary electrophoresis, electrochromatographic or capillary electrochromatographic stage.

12. An analyte detection system according to any of claims 1 to 8 in which the analyte analysis stage comprises a flow injection analysis stage.

13. An analyte detection system according to any previous claim in which the spray chamber is an expansion chamber.

14. An analyte detection system according to claim 13 or claim 14 in which the spray chamber is adapted so as to cause the aerosol to flow in a centrifugal flow pattern.

15. An analyte detection system according to any one of the preceding claims wherein the system operates at condensed phase flow rates of greater than 50µlmin⁻¹.

16. An analyte detection system according to any one of the preceding claims wherein the system operates at condensed phase flow rates of greater than 100µlmin⁻¹.

17. Use of a system according to any of claims 1 to 16 to detect volatile and non-volatile compounds or elements.

18. Use of a system according to any of claims 1 to 16 to detect organic compounds.

19. Use of a system according to any of claims 1 to 16 to detect inorganic compounds.

## Patentansprüche

1. Analyten-Nachweissystem, das Folgendes umfasst:
einen flammenbasierten Analytendetektor (14), **dadurch gekennzeichnet, dass** es außerdem Folgendes umfasst:
eine Röhre (24) mit enger Bohrung, durch die eine kondensierte Phase, die den Analyten enthält, aus einer Analytenanalysestufe strömt,
einen Vernebler (12), in den die kondensierte Phase aus der Röhre (24) strömt und in den über eine gasführende Leitung (26) ein Verneblungsgas eingeleitet wird, um ein analytenhaltiges Aerosol zu erzeugen,
eine Diffusionskammer (16), in die das analytenhaltige Aerosol aus dem Vernebler (12) eingeleitet wird, um eine Turbulenz in dem Aerosolstrom zu schaffen und um das analytenhaltige Aerosol in den flammenbasierten Analytendetektor (14) einzuleiten, und
eine temperaturgeregelte Umgebung (22), innerhalb derer die Röhre (24) mit enger Bohrung, der Vernebler (12), die gasführende Leitung (26) und die Diffusionskammer (16) angeordnet sind, und
wobei die kondensierte Phase keine oder eine vernachlässigbare Reaktion von dem flammenbasierten Analytendetektor erzeugt und wobei die kondensierte Phase den Vernebler mit einer Temperatur wesentlich unter dem Siedepunkt und mit einer Durchflussgeschwindigkeit von mehr als 20 µl min⁻¹ erreicht.

2. Analyten-Nachweissystem nach Anspruch 1, wobei die kondensierte Phase wässrig ist.

3. Analyten-Nachweissystem nach Anspruch 2, wobei die kondensierte Phase eine wässrige Lösung ist.

4. Analyten-Nachweissystem nach Anspruch 3, wobei die kondensierte Phase eine überhitzte wässrige Lösung ist.

5. Analyten-Nachweissystem nach Anspruch 1, wobei die kondensierte Phase ein überkritisches Fluid ist.

6. Analyten-Nachweissystem nach Anspruch 1, wobei die kondensierte Phase eine überhitzte flüssige Phase ist.

7. Analyten-Nachweissystem nach einem der vorhergehenden Absprüche, wobei der Detektor ein Flammenionisationsdetektor ist.

8. Analyten-Nachweissystem nach einem der Ansprüche 1 bis 7, wobei der Detektor ein thermionischer Detektor, ein photometrischer Impulsflammendetektor oder ein photometrischer Flammendetektor ist.

9. Analyten-Nachweissystem nach einem der Ansprüche 1 bis 8, wobei die Analytenanalysestufe eine Analytenabscheidungsstufe umfasst und der Ausfluss aus der Analytenabscheidungsstufe in die Verneblungsmittel eingeleitet wird.

10. Analyten-Nachweissystem nach Anspruch 9, wobei die Analytenabscheidungsstufe eine flüssigchromatographische Stufe umfasst.

11. Analyten-Nachweissystem nach Anspruch 9, wobei die Abscheidungsstufe eine kapillarelektrophoretische, eine elektrochromatographische oder eine kapillarelektrochromatographische Stufe umfasst.

12. Analyten-Nachweissystem nach einem der Ansprüche 1 bis 8, wobei die Analytenanalysestufe eine Fließinjektionsanalysestufe umfasst.

13. Analyten-Nachweissystem nach einem der vorhergehenden Ansprüche, wobei die Diffüsionskammer eine Expansionskammer ist.

14. Analyten-Nachweissystem nach Anspruch 13 oder Anspruch 14, wobei die Diffusionskammer so eingerichtet ist, dass sie bewirkt, dass das Aerosol in einem zentrifugalen Strömungsbild strömt.

15. Analyten-Nachweissystem nach einem der vorhergehenden Ansprüche, wobei das System bei Durchflussgeschwindigkeiten der kondensierten Phase von mehr als 50 µl min⁻¹ arbeitet.

16. Analyten-Nachweissystem nach einem der vorhergehenden Ansprüche, wobei das System bei Durchflussgeschwindigkeiten der kondensierten Phase von mehr als 100 µl min⁻¹ arbeitet.

17. Verwendung eines Systems nach einem der Ansprüche 1 bis 16 zum Nachweisen von flüchtigen und nichtflüchtigen Verbindungen oder Elementen.

18. Verwendung eines Systems nach einem der Ansprüche 1 bis 16 zum Nachweisen von organischen Verbindungen.

19. Verwendung eines Systems nach einem der Ansprüche 1 bis 16 zum Nachweisen von anorganischen Verbindungen.

## Revendications

1. Système de détection d'analytes, comprenant :
un détecteur d'analytes à base d'une flamme (14), **caractérisé en ce qu'**il comprend en plus :
un tube à alésage étroit (24), à travers lequel une phase condensée, contenant les analytes, s'écoule à partir d'une étape d'analyse des analytes ;
un nébuliseur (12), dans lequel est introduite la phase condensée à partir du tube (24), et dans lequel un gaz de nébulisation est introduit à travers un conduit de conduite du gaz (26), pour produire un aérosol contenant les analytes ;
une chambre de pulvérisation (16), dans laquelle l'aérosol contenant les analytes est introduit à partir du nébuliseur (12), pour entraîner une turbulence dans l'écoulement de l'aérosol et pour introduire l'aérosol contenant les analytes dans le détecteur d'analytes à base d'une flamme (14) ; et
un environnement à contrôle de la température (22), dans lequel sont agencés le tube à alésage étroit (24), le nébuliseur (12), le conduit de conduite du gaz (26) et la chambre de pulvérisation (16) ; et
dans lequel la phase condensée n'entraîne pas de réponse ou une réponse négligeable de la part du détecteur d'analytes à base d'une flamme, et dans lequel la phase condensée atteint le nébuliseur à une température notablement inférieure au point d'ébullition et avec un débit supérieur à 20 µl min⁻¹.

2. Système de détection d'analytes selon la revendication 1, dans lequel la phase condensée est aqueuse.

3. Système de détection d'analytes selon la revendication 2, dans lequel la phase condensée est une solution aqueuse.

4. Système de détection d'analytes selon la revendication 3, dans lequel la phase condensée est une solution aqueuse surchauffée.

5. Système de détection d'analytes selon la revendication 1, dans lequel la phase condensée est µn fluide supercritique.

6. Système de détection d'analytes selon la revendication 1, dans lequel la phase condensée est une phase liquide surchauffée.

7. Système de détection d'analytes selon l'une quelconque des revendications précédentes, dans lequel le détecteur est un détecteur à ionisation de flamme.

8. Système de détection d'analytes selon l'une quelconque des revendications 1 à 7, dans lequel le détecteur est un détecteur thermionique, un détecteur à photométrie de flamme pulsée ou un détecteur à photométrie de flemme.

9. Système de détection d'analytes selon l'une quelconque des revendications 1 à 8, dans lequel l'étape d'analyse des analytes comprend une étape de séparation des analytes, l'effluent de l'étape de séparation des analytes étant introduit dans le moyen de nébulisation.

10. Système de détection d'analytes selon la revendication 9, dans lequel l'étape de séparation des analytes comprend une étape de chromatographie en phase liquide.

11. Système de détection d'analytes selon la revendication 9, dans lequel l'étape de séparation comprend une étape d'électrophorèse capillaire, une étape d'électrochromatographie ou une étape d'électrochromatographie capillaire.

12. Système de détection d'analytes selon l'une quelconque des revendications 1 à 8, dans lequel l'étape d'analyse des analytes comprend une étape d'analyse à injection de flux.

13. Système de détection d'analytes selon l'une quelconque des revendications précédentes, dans lequel la chambre de pulvérisation est une chambre d'expansion.

14. Système de détection d'analytes selon les revendications 13 ou 14, dans lequel la chambre de pulvérisation est adaptée de sorte à entraîner l'écoulement de l'aérosol dans une configuration d'écoulement centrifuge.

15. Système de détection d'analytes selon l'une quelconque des revendications précédentes, dans lequel le système fonctionne à des débits en phase condensée supérieurs à 50 µlmin⁻¹.

16. Système de détection d'analytes selon l'une quelconque des revendications précédentes, dans lequel le système fonctionne avec des débits en phase condensée supérieurs à 100 µlmin⁻¹.

17. Utilisation d'un système selon l'une quelconque des revendications 1 à 16 pour détecter des composés ou des éléments volatiles et non volatiles.

18. Utilisation d'un système selon l'une quelconque des revendications 1 à 16 pour détecter des composés organiques.

19. Utilisation d'un système selon l'une quelconque des revendications 1 à 16 pour détecter des composés inorganiques.
